# DEMANDE DE BREVET EUROPEEN

(11) **EP 2 502 825 A1**
(43) Date de publication de la demande: **26.09.2012**
(21) Numéro de dépôt: 11290147.5
(22) Date de dépôt: 25.03.2011
(51) Int. Cl.: B64C 13/30, B64C 13/42, B64C 27/58

(54) **Pilotage de secours par vérin série pour chaine de commande de vol manuelle d'aéronef et Procédé**

(71) Demandeur: EUROCOPTER, 13725 Marignane Cédex (FR); Eurocopter Deutschland GmbH, 86609 Donauwörth (DE)
(72) Inventeur: Chaduc, Bruno, 13510 Eguilles (FR); Hellio, Patrick, 13320 Bouc Bel Air (FR); Krok, Karsten, 85356 Freising (DE); Gemmati, Bernard, 84360 Lauris (FR)
(74) Mandataire: GPI & Associés

(57) **Abrégé**

La présente invention propose un pilotage de secours d'une chaîne de commande de vol manuelle (7) d'aéronef (1).

Une transmission terminale mécanique (23) comporte vers l'aval, au moins un vérin série (21) en parallèle d'au moins une bielle de centrage (22). En cas de rupture d'un moyen flexible de liaison (26), un dispositif de commande (8) en amont prend une autorité sur l'agencement électronique de contrôle (29) du vérin série (21), tandis qu'un quadrant pivotant de sortie (25) est soumis par ladite bielle de centrage (22) à une action de blocage et centrage.

En cas de rupture de chaîne, ce quadrant pivotant de sortie (25) forme un appui pour le vérin série (21), et un pilotage de secours est transmis depuis un dispositif de commande vers l'agencement électronique de contrôle (29), de manière à actionner la surface aérodynamique (11) en aval.

## Description

La présente invention vise le domaine du pilotage de secours des aéronefs.

Le pilotage de secours signifie le maintien d'une certaine autorité du pilote sur les changements d'attitude de l'aéronef, hors fonctionnement normal d'une ou de plusieurs chaînes de commandes de vol manuelles prévues pour commander en fonctionnement normal ces changements d'attitude.

Sans limitation, l'invention est exposée dans ses applications à des aéronefs à voilure tournante, tels que des hélicoptères et autres giravions ou hybrides. L'invention s'applique également à d'autres aéronefs ayant une voilure dite fixe (avions, planeurs ou analogues).

Les chaînes de commandes de vol concernées par l'invention sont « manuelles ». Par suite, pour obtenir un changement d'attitude en vol de l'aéronef en fonctionnement normal, le pilote agit sur un dispositif de commande (e.g. manche, levier ou palonnier - cf. infra), qui fait partie et agit sur une ou plusieurs chaînes de commandes de vol manuelles.

Ces chaînes de commandes de vol manuelles comportent et sont conçues pour contrôler les actionnements d'une ou de plusieurs surfaces aérodynamiques telles que des pales de rotor(s) et / ou autres (ailes, volets, dérives, empennages, gouvernes, etc.). Ce sont ces surfaces aérodynamiques elles-mêmes qui sont aptes à engendrer des changements d'attitude de l'aéronef.

Notamment, une chaîne de commande de vol manuelle transmet l'autorité du pilote pour changer l'attitude de vol de l'aéronef en roulis (en anglais « Roll »), en tangage (en anglais « Pitch ») ou en lacet (en anglais « Yaw »).

Bien sûr, le terme «manuelle» n'est pas à considérer au sens littéral. Il différencie notamment une chaîne de commande de vol manuelle d'une commande « automatique » (e.g. un pilote automatique ou « AFCS » pour « Automatic Flight Control System »). Par ailleurs, un dispositif de commande tel que la chaîne mécanique de commande de lacet, qui est usuellement actionné par l'intermédiaire d'un palonnier, est à aussi considérer comme faisant partie d'une chaîne de commande de vol manuelle.

Bien que dite manuelle, une commande de vol peut comporter une assistance en puissance, pour aider le pilote à déplacer le dispositif de commande manuelle à l'encontre des forces de réaction externes sur les surfaces aérodynamiques.

Il n'est pas rare qu'une chaîne de commande de vol manuelle prévoit aussi une restitution au pilote de certaines sensations traduisant ces forces de réaction, vers des dispositifs de commandes manuelles. On parle alors de restitution « haptique » ou encore de « TRIM » en parallèle de la chaîne de commande.

D'un point de vue cinématique, d'amont en aval, une chaîne de commande de vol manuelle comporte donc au moins un dispositif de commande de vol manuelle (à l'amont), des liaisons mécaniques intermédiaires dénommées « timoneries » de transmission de commande, et (à l'aval) une surface aérodynamique telle qu'une voilure tournante (e.g. des pales de rotor).

Pour illustrer l'exposé des chaînes de commandes de vol manuelles, on se réfère à un hélicoptère classique.

En général, une chaîne de commande de vol manuelle dite « chaîne de pas cyclique » agît sur le pas cyclique des pales du rotor principal, pour provoquer un changement d'attitude de vol en roulis et en tangage, par actionnement d'un dispositif de commande de vol manuelle correspondant dit « manche cyclique ».

Une autre chaîne de commande de vol manuelle dite « chaîne de pas collectif» agît sur le pas collectif des pales pour provoquer un changement d'attitude de vol en vertical (i.e. changement d'altitude) de l'aéronef, par actionnement d'un dispositif de commande de vol manuelle correspondant dit « levier de pas collectif » ou « levier collectif ».

Encore une autre chaîne de commande de vol manuelle qui est dédiée au changement d'attitude de vol en lacet, est actionnée par le pilote à l'aide d'un dispositif de commande de vol sous forme de palonnier.

Il est à noter qu'un combinateur permet le fonctionnement des commandes de pas collectif et de pas cyclique indépendamment l'une de l'autre et sans interactions entre elles.

Pour un hélicoptère de tonnage important, par exemple, une chaîne de commande de vol manuelle comporte souvent un déphaseur, et dans le cas d'un hélicoptère à rotor anti-couple dit « arrière », la chaîne de commande de vol manuelle en lacet comprend outre un palonnier (dispositif de commande), des timoneries primaires et secondaires (de lacet), un moyen de couplage pas collectif-lacet et un combinateur.

Ces chaînes de commandes de vol manuelles sont donc relativement longues et lourdes, en particulier pour la cinématique de commande des changements d'attitude en lacet.

Ces chaînes génèrent des efforts de friction qui peuvent s'avérer conséquents, d'autant qu'elles sont de longueurs importantes et / ou complexes (i.e. comporte de nombreux constituants)

En théorie, ces efforts pourraient conduire à utiliser des commandes de vol électriques, comme décrit par les documents US2004200928 ou US7229046. Néanmoins, ces commandes de vol électriques sont difficiles à implémenter en pratique. Notamment sur les aéronefs existants, ceci impliquerait de profondes et coûteuses modifications.

C'est en pratique face à cette difficulté, qu'une assistance en puissance, hydraulique ou pneumatique est adjointe à la chaîne de commande de vol manuelle.

On cite ci-après d'autres documents qui méritent d'être rapprochés de l'invention.

Le document FR2912375 décrit un exemple de « vérin série » (en anglais « Smart Electro Mechanical Actuator » ou « SEMA »). Ce vérin comporte un moteur électrique rotatif, des capteurs de position et un circuit d'asservissement connecté aux deux capteurs de position et au moteur, pour délivrer un signal d'alimentation du moteur qui varie en fonction d'un signal de consigne de position et en fonction des signaux délivrés par les deux capteurs de position. Des modules redondants calculent une position en fonction des deux capteurs, sous la surveillance mutuelle des résultats délivrés par ces modules de calcul, pour pouvoir produire un signal de détection de défaut.

Le document FR2920744 décrit un vérin de compensation électrique pour actionner les commandes d'un giravion. Un système dit pilote automatique transmet des commandes à des vérins électriques montés en série au sein de commandes de vol. Un vérin de compensation équipe également ces commandes, notamment en tangage et en roulis, pour le maintien d'un point d'ancrage (ou « point milieu ») de la commande manuelle («manche cyclique » notamment). Le vérin de compensation comporte un moteur rotatif (auto)synchrone et un réducteur de vitesse réversible. Un circuit de commande du moteur fait varier en fonction d'une consigne de position appliquée, la vitesse d'étages de réduction à engrenages.

Le document FR2946317 décrit un guignol de renvoi pour dispositif de commande manuelle de vol d'aéronef à voilure tournante, pour appliquer un gain variable à une chaîne cinématique de changement d'attitude de vol.

Le document FR2946620 décrit, pour proposer une aide au pilotage polyvalente, une chaîne cinématique où l'on génère un effort complémentaire, à l'aide d'un moyen d'aide au pilotage lié mécaniquement à ladite chaîne, en fonction de la position de la commande de vol et d'un effort instantané mesuré sur la chaîne cinématique. Un moyen de pilotage automatique peut commander l'aide au pilotage pour lui faire remplir les fonctions des amortisseurs, et des vérins parallèles existants, afin de remplacer les vérins parallèles, les amortisseurs et le bloc hydraulique mis en oeuvre classiquement. L'aide au pilotage peut optionnellement comporter au moins un vérin série agencé entre le rotor et le moyen de liaison.

Le document US4492907 décrit un système de commande de lacet pour hélicoptère, avec un système de liaison à assistance hydraulique et deux servocommandes agissant en parallèle du système de liaison durant un mode de vol automatique. Un circuit d'asservissement en position comporte un circuit de contrôle de la position de l'organe entraîné par un servomoteur en série, qui peut notamment être mesurée par l'intermédiaire d'un potentiomètre

Le document US4529155 décrit un système de commande de vol pour hélicoptère, avec des quadrants semi-circulaires et des embouts flottants sur chacun desquels est ancré un câble flexible. Ces embouts flottants sont sollicités par des ressorts pour le cas d'une séparation de câble. En cas de rupture du câble opposé, un centrage est opéré par les ressorts.

Le document US2010072322 décrit un système de palonniers dédié à un pilotage en lacet à faible déplacement. Pour agir sur un rotor anti-couple, sont prévus le système de palonniers, une servocommande et une logique de commande interposée.

Bien qu'intéressants, ces documents sont en pratique peu adaptés au contexte très particulier du pilotage de secours en cas de rupture d'une commande de vol d'un aéronef à voilure tournante, par exemple d'un hélicoptère.

Dans ce contexte, l'invention vise à résoudre les problèmes techniques suivants, notamment.

Pour des raisons de sécurité évidentes en aéronautique, diverses solutions ont été proposées pour palier une rupture de commandes de vol d'un aéronef. En effet, une telle rupture au sein d'une chaîne de commande de vol manuelle pourrait conduire à la perte de l'aéronef.

Par exemple, on connait une chaîne de commande de vol manuelle en lacet pour hélicoptère qui est équipée d'un système à bielle de centrage avec un ressort, comme notamment sur des hélicoptères Eurocopter EC330, EC332 ou EC225.

Un tel système à bielle de centrage et ressort présente des fonctions comparables à l'objet du document US4529155. Ce système permet - par imposition d'un équilibre mécanique- de figer la position de la surface aérodynamique qui agit comme gouverne (c'est-à-dire le rotor anti-couple pour la chaîne de lacet), dans une position prédéterminée dans le cas d'une rupture de la commande de lacet.

Bien que ce système à bielle de centrage et ressort soit efficace, la position de rappel est fixe et donc ne correspond qu'à un unique point de vol, qui doit être associé à une « vitesse refuge » selon les procédures courantes. En d'autres termes, le pilote ne peut plus alors imposer de changement d'attitude en lacet à l'aéronef, tandis que ce pilote doit obtenir que l'aéronef soit à une vitesse imposée sur trajectoire (dite « vitesse refuge », i.e. une valeur normalisée pour un aéronef donné, par exemple égale à une vitesse de puissance minimum).

Ceci impose par exemple un « atterrissage roulé » : l'aéronef touche le sol avec une certaine vitesse d'avancement. Dans le cas d'un aéronef à voilure tournante ne disposant pas de roues de train d'atterrissage, on aboutit au mieux à un « atterrissage dur».

D'autres approches comme sur les appareils H60 « Black Hawk » sont sensiblement similaires à celle qui précède. Toutefois, ces approches ont tendance à accroitre les efforts de commande dans la chaîne de commande de vol manuelle, notamment lorsque celle-ci est commandée en mode nominal. Ces efforts doivent à la fois être vaincus par un vérin série (similaire à l'objet du document FR2912375) et par le vérin parallèle (« Trim »), de sorte qu'il n'y a pas de possibilité de pilotage en cas de rupture de timonerie (câble), avec un point d'équilibre unique entre l'effort de commande et la course de commande, avec une valeur donnée d'effort de rappel.

L'un de ces principaux buts de l'invention est de proposer une architecture de commande d'aéronef qui augmente encore la sécurité en cas de rupture d'au moins une chaîne de commande de vol.

L'invention vise donc à maintenir une autorité manuelle partielle sur la chaîne, après rupture d'éléments mécaniques de timonerie.

Par ailleurs, l'invention vise à ne pas accroitre la masse d'ensemble d'une chaîne de commande de vol manuelle, voire à la réduire, tout en offrant une sécurité accrue.

Il va de soi que l'adaptation de l'invention à un aéronef existant ne doit pas générer d'importantes modifications de sa structure d'ensemble, typiquement en évitant de devoir adapter les lois du pilote automatique le cas échéant. Autant que faire se peut, l'invention vise à offrir des fonctionnalités nouvelles ou améliorées, en employant des structures existantes.

Egalement, l'invention vise à ne pas augmenter, voire à réduire, les efforts nécessaires à l'actionnement par le pilote d'une chaîne de commande de vol manuelle (en fonctionnement normal), tout en offrant une sécurité accrue (en cas de rupture).

Enfin, l'invention vise à pallier les problèmes évoqués, tout en se reposant sur la validité des analyses de sécurité existantes, voire sans nécessiter d'importantes reprises de certifications.

L'invention est définie par les revendications.

A cet effet, un objet de l'invention est un procédé de pilotage de secours d'une chaîne de commande de vol manuelle d'aéronef.

Selon ce procédé, cette chaîne de commande de vol manuelle est agencée pour comporter au moins d'amont à aval : un dispositif de commande de vol manuelle, des liaisons mécaniques intermédiaires de transmission de commande, et une surface aérodynamique de changement d'attitude de vol de l'aéronef.

Ce procédé prévoit qu'au moins une liaison mécanique intermédiaire est agencée pour comporter une transmission terminale mécanique, avec un quadrant pivotant d'entrée à l'amont de la transmission terminale mécanique, un quadrant pivotant de sortie à l'aval de la transmission terminale mécanique, et au moins un moyen flexible de liaison (e.g. un ou des câbles).

Ce procédé prévoit que ce moyen flexible de liaison est disposé entre le quadrant pivotant d'entrée et le quadrant pivotant de sortie et pour les relier de manière à transmettre des mouvements de rotation de commande entre ces quadrants pivotants. Dans cette chaîne de commande de vol manuelle qui comporte au moins une bielle de centrage, au moins un vérin série est couplé (c'est-à-dire logiquement relié) à un agencement électronique de contrôle de ce vérin série.

Selon le procédé de l'invention, ladite transmission terminale mécanique est agencée pour comporter vers l'aval, au moins un vérin série en parallèle d'au moins une bielle de centrage. Ledit quadrant pivotant de sortie possède au moins deux articulations excentriques distinctes de pivotement. L'une est une articulation excentrique de transmission de commande vers ladite surface aérodynamique, pour que cette surface aérodynamique soit sous l'autorité de la chaîne de commande de vol manuelle. Ce procédé prévoit de relier par cette articulation excentrique de transmission de commande ledit vérin série au quadrant pivotant de sortie. L'autre articulation excentrique de centrage d'urgence est agencée pour relier ladite bielle de centrage au quadrant pivotant de sortie.

Selon ce procédé, en cas de rupture dudit moyen flexible de liaison, le dispositif de commande en amont prend une autorité sur l'agencement électronique de contrôle du vérin série, tandis que le quadrant pivotant de sortie est soumis par ladite bielle de centrage à une action de centrage. De la sorte, ce quadrant pivotant de sortie forme un appui pour ledit vérin série, et un pilotage de secours est transmis depuis le dispositif de commande en amont vers l'agencement électronique de contrôle de manière à actionner ledit vérin série et ainsi permettre des rotations contrôlées dudit quadrant pivotant de sortie, d'où un actionnement correspondant de secours de la surface aérodynamique en aval.

Un autre objet de l'invention est une chaîne de commande de vol manuelle d'aéronef. Cette chaîne de commande de vol manuelle comporte au moins d'amont à aval : un dispositif de commande de vol manuelle, des liaisons mécaniques intermédiaires de transmission de commande, et une surface aérodynamique de changement d'attitude de vol de l'aéronef.

Au moins une liaison mécanique intermédiaire comporte une transmission terminale mécanique, avec un quadrant pivotant d'entrée à l'amont de la transmission terminale mécanique, un quadrant pivotant de sortie à l'aval de la transmission terminale mécanique, et au moins un moyen flexible de liaison.

Ce moyen flexible de liaison est disposé entre le quadrant pivotant d'entrée et le quadrant pivotant de sortie et est agencé pour transmettre des mouvements de rotation de commande entre ces quadrants pivotants. Cette chaîne de commande de vol manuelle comporte au moins une bielle de centrage et au moins un vérin série relié logiquement à un agencement électronique de contrôle de ce vérin série.

Selon l'invention, ladite transmission terminale mécanique comporte vers l'aval, au moins un vérin série en parallèle d'au moins une bielle de centrage. Ledit quadrant pivotant de sortie possède au moins deux articulations excentriques distinctes de pivotement. L'une est une articulation excentrique de transmission de commande vers ladite surface aérodynamique sous l'autorité de la chaîne de commande de vol manuelle. Cette articulation excentrique de transmission de commande relie ledit vérin série au quadrant pivotant de sortie. L'autre articulation est une articulation excentrique de centrage d'urgence, qui relie ladite bielle de centrage au quadrant pivotant de sortie. Une articulation distale de la chaîne de commande de vol manuelle relie ladite bielle de centrage à une structure fixe de l'aéronef de destination, à l'opposé longitudinalement du quadrant pivotant de sortie. Ledit quadrant pivotant de sortie forme ainsi, en cas de rupture dudit moyen flexible de liaison, un appui pour ledit vérin série, tandis que ce vérin série est soumis à l'autorité d'un pilotage de secours, depuis le dispositif de commande de vol manuelle et via l'agencement électronique de contrôle.

De la sorte, ce quadrant pivotant de sortie forme d'une part un appui pour ledit vérin série, et un pilotage de secours est transmis depuis le dispositif de commande en amont vers l'agencement électronique de contrôle de manière à actionner ledit vérin série. Des rotations contrôlées dudit quadrant pivotant de sortie sont ainsi permises, e.g. en cas de rupture de la transmission terminale mécanique, pour obtenir un actionnement correspondant de secours de la surface aérodynamique située en aval.

Selon une réalisation de cette chaîne de commande de vol manuelle, ladite transmission terminale mécanique comporte vers l'aval, un unique vérin série en parallèle d'une unique bielle de centrage. Cet unique vérin série est directement articulé d'une part sur le quadrant pivotant de sortie et d'autre part à des moyens de renvoi vers ladite surface aérodynamique. L'unique bielle de centrage est directement articulée d'une part sur le quadrant pivotant de sortie et d'autre part à un pivot fixe de structure.

Selon une autre réalisation de cette chaîne de commande de vol manuelle, ladite transmission terminale mécanique comporte vers l'aval, au moins une paire de vérins série, et interposée en série entre chaque vérin série d'une paire, une bascule à pivot médian d'emplacement fixe, chaque paire de vérins série étant en parallèle d'au moins une bielle de centrage.

Selon une réalisation de la chaîne de commande de vol manuelle, ledit agencement électronique de contrôle du ou des vérins série en aval du quadrant de sortie est logiquement sous l'autorité partagée d'un système de pilotage automatique et dudit dispositif de commande de vol manuelle.

Selon une réalisation, la chaîne de commande de vol manuelle transmet l'autorité de pilotage sur un changement d'attitude de vol de l'aéronef en lacet, ledit dispositif de commande de vol manuelle étant en forme de pédale de palonnier.

Selon cette réalisation, la surface aérodynamique est en forme de rotor arrière anti-couple ou analogues.

Selon une réalisation, la chaîne de commande de vol manuelle transmet l'autorité de pilotage sur un changement d'attitude de vol de l'aéronef en roulis, ledit dispositif de commande de vol manuelle étant en forme de manche cyclique.

Selon une réalisation, la chaîne de commande de vol manuelle transmet l'autorité de pilotage sur un changement d'attitude de vol de l'aéronef en tangage, ledit dispositif de commande de vol manuelle étant en forme de manche cyclique.

Selon une réalisation, ladite chaîne de commande de vol manuelle comporte, en aval dudit vérin série articulé au quadrant pivotant de sortie, une assistance en puissance, sous la forme de servocommande ou analogues interposée en amont de la surface aérodynamique sous l'autorité de la chaîne de commande de vol manuelle et en aval dudit quadrant de sortie.

Selon une réalisation, la chaîne de commande de vol manuelle transmet l'autorité de pilotage sur un changement d'attitude de vol de l'aéronef en vertical, ledit dispositif de commande de vol manuelle étant en forme de levier collectif.

Selon une réalisation, ladite chaîne de commande de vol manuelle comporte, en amont de ladite transmission terminale mécanique, un combinateur qui est interposé entre le dispositif de commande de vol manuelle et ledit quadrant pivotant d'entrée.

Selon une réalisation, ladite chaîne de commande de vol manuelle comporte, un moyen flexible de liaison pourvu de deux câbles en parallèle, avec chacun une extrémité amont et une extrémité aval. Une extrémité amont de chacun des deux câbles parallèles du moyen flexible de liaison est couplée (en fonctionnement normal) au quadrant pivotant d'entrée, tandis qu'une extrémité aval de chaque câble du moyen flexible de liaison est couplée (en fonctionnement normal) au quadrant pivotant de sortie.

Selon une réalisation, dans la transmission terminale mécanique de ladite chaîne de commande de vol manuelle, suivant une direction longitudinale (sensiblement entre amont et aval), les chaque vérin série en parallèle de ladite bielle de centrage sont au moins en partie contigus, voire sensiblement colinéaires.

Encore un autre objet de l'invention est un aéronef qui met en oeuvre le procédé de pilotage de secours et / ou comporte une ou plusieurs chaînes de commande de vol manuelle tels qu'évoqués.

Selon l'invention, cet aéronef est à voilure tournante.

Selon une réalisation de cet aéronef, la surface aérodynamique est un rotor arrière anti-couple, tandis que la chaîne de commande de vol manuelle agit sur une attitude de vol en lacet de l'aéronef.

L'invention et ses avantages apparaissent plus en détail dans la description qui suit d'exemples de réalisation donnés à titre illustratif, en référence aux figures annexées, où :

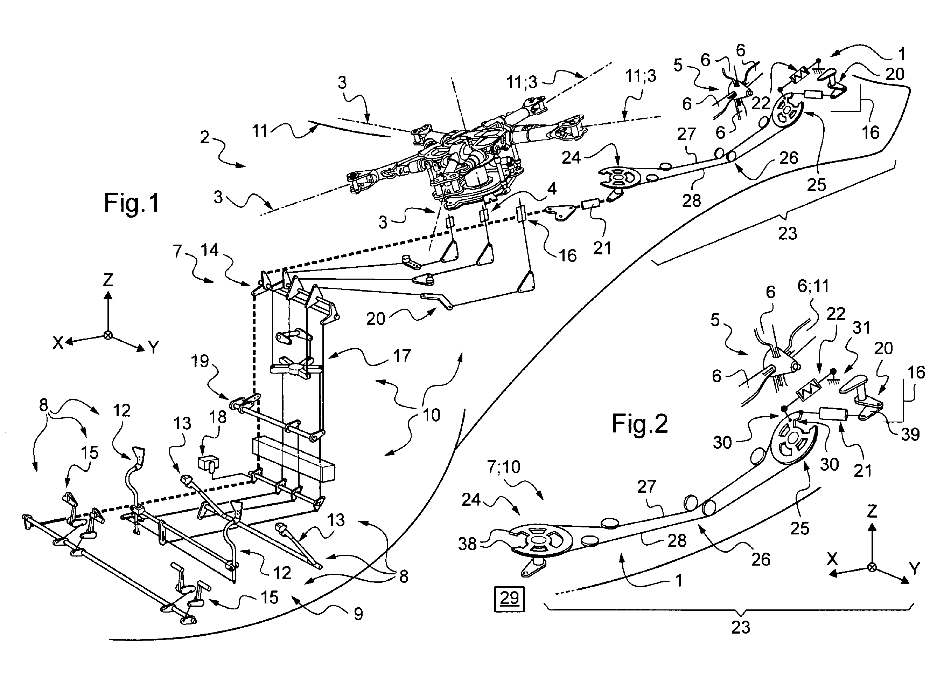

- la figure 1 est une vue partielle schématique en perspective et en éclaté, d'un exemple d'aéronef à voilure tournante, du type hélicoptère à rotor anti-couple arrière et unique rotor principal de sustentation et propulsion, avec une chaîne de commande de vol manuelle en lacet pourvue d'un système connu de bielle de centrage avec ressort,
- la figure 2 est une vue partielle schématique en perspective d'un détail de chaîne de commande de vol manuelle en lacet initialement similaire à celle de la figure 1 et rendue conforme à un premier mode de réalisation l'invention, avec un unique vérin série en parallèle d'une unique bielle de centrage,

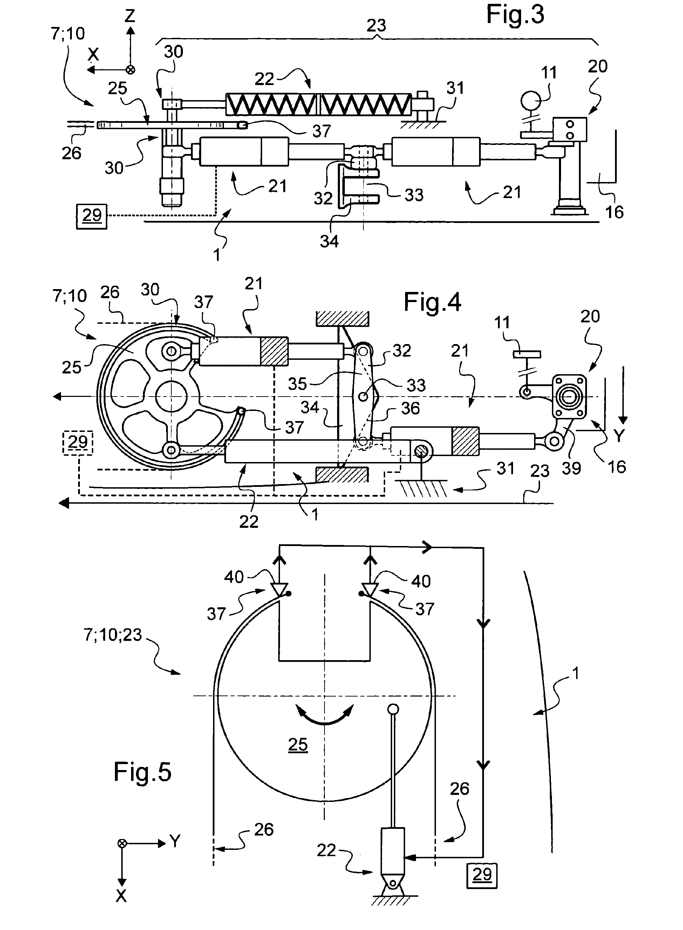

- la figure 3 est une vue schématique partielle en élévation longitudinale d'une transmission terminale mécanique selon un second mode de réalisation de l'invention, avec une paire de vérins série, entre lesquels est interposée en série une bascule à pivot médian d'emplacement fixe, et en parallèle de ladite paire de vérins série, une bielle de centrage unique,

- la figure 4 est une vue schématique partielle en plan longitudinal de dessus, de la transmission terminale mécanique de l'invention visible sur la figure 3, avec sa paire de vérins série (l'un amont gauche, l'autre aval droite), sa bascule à pivot fixe et en parallèle sa bielle de centrage unique,
- la figure 5 est une vue similaire à la figure 4, qui illustre une transmission terminale mécanique selon l'invention (le ou les vérins série parallèles ne sont pas représentés), avec des détecteurs électriques de rupture de timonerie, installés sur le quadrant pivotant de sortie et aptes, en cas de rupture, d'activer le levier de centrage à ressort.

Sur les figures sont représentées trois directions X, Y et Z orthogonales les unes aux autres.

Une direction X dite longitudinale, correspond aux longueurs ou dimensions principales des structures décrites. Ainsi, la composante principale d'une vitesse air sur trajectoire en vol en palier ou de la poussée d'avancement est dirigée suivant cette direction X.

En aéronautique, il est courant que cette direction X désigne généralement l'axe de roulis d'un aéronef, lorsque celui-ci est représenté dans son ensemble. Suivant cette direction X dite longitudinale, on définit vers l'amont (vers l'avant) et l'aval (vers l'arrière).

Une autre direction Y dite transversale, correspond aux largeurs ou dimensions latérales des structures décrites. Ces directions - longitudinale X et transversale Y - sont parfois dites horizontales, par simplification. Par exemple, l'éloignement par rapport au fuselage d'un agencement de propulsion est essentiellement mesuré suivant cette direction Y.

En aéronautique, il est courant que cette direction Y désigne généralement l'axe de tangage d'un aéronef. C'est en outre suivant cette direction Y que se réfèrent les termes gauche (en regardant vers l'avant) et droite, par exemple pour différencier deux demiailes ou deux agencements de propulsion.

Une troisième direction Z est dite d'élévation et correspond aux dimensions en hauteur des structures décrites : les termes haut/bas s'y réfèrent. Parfois, cette direction Z est dite verticale.

En aéronautique, cette direction Z désigne généralement l'axe de lacet d'un aéronef. Par simplification, on considère que l'axe de rotation du rotor principal d'un aéronef à voilure tournante est sensiblement étendu suivant cette direction Z.

Les directions X et Y définissent conjointement un plan X, Y dit principal (sécant linéairement à celui de la feuille sur la figure 3 ou confondu avec le plan de la figure 4) à l'intérieur duquel, pour un aéronef 1 tel que représenté sur les figures 1 à 5, s'inscrit le polygone de sustentation.

Dans les exemples, cet aéronef 1 est un hélicoptère et comporte une voilure tournante sous forme de rotor principal de sustentation 2 avec une pluralité de pales 3 (figure 1). Ce rotor principal 2 est monté sur un mât 4 qui en assure l'entraînement en rotation notamment. Une structure proche se trouve sur des hélicoptères Eurocopter Super Puma MKII, EC725, par exemple.

Dans d'autres exemples, cet aéronef 1 est à voilure fixe, notamment avion, planeur ou analogues.

En vol, les pales 3 d'un tel rotor principal 2 de la figure 1 décrivent un cône très ouvert, dont le plan de rotation est perpendiculaire à la portance générale générée par ce rotor, par simplification proche de la direction d'élévation Z. Cette portance générale du rotor principal 2 peut alors être décomposée en une force verticale de sustentation et une force horizontale qui assure la translation d'avancement (sur trajectoire de vol) de l'aéronef 1.

Pour mémoire, une commande de pas cyclique du pas des pales d'un rotor principal d'aéronef à voilure tournante, agit classiquement sur l'attitude de cet aéronef autour de ces deux directions X et Y, respectivement en roulis et tangage.

L'aéronef 1 des figures 1 et 2 possède également un rotor anti-couple arrière 5 avec des pales 6.

Sur la figure 1, l'aéronef 1 possède également plusieurs chaînes de commande de vol manuelles 7.

D'un point de vue cinématique, d'amont en aval, une chaîne de commande de vol manuelle 7 comporte au moins :
■ un dispositif de commande de vol manuelle 8 (à l'amont, en général dans un poste de pilotage 9 et actionnée par un pilote) ;
■ des liaisons mécaniques intermédiaires 10, aussi dénommées « timoneries » de transmission de commande, et
■ à l'aval, une ou plusieurs surfaces aérodynamiques 11 telles que les pales 3 ou 6 des rotors 2 ou 5.

Selon les mises en oeuvre de l'invention, une surface aérodynamique 11 comporte un ou plusieurs constituant(s) aérodynamique(s), choisi(s) parmi l'ensemble : rotor(s), aile(s), aileron(s), volet(s), dérive(s), empennage(s), gouverne(s), voire turbine(s), propulseur(s) ou analogue(s).

Classiquement, on prévoit deux chaînes 7 : une chaîne de roulis et de tangage par commande du pas cyclique des pales dudit rotor principal 2, et une chaîne de changement d'altitude par commande du pas collectif des pales de ce rotor principal 2.

Notamment, une chaîne de commande de vol manuelle 7 contrôle la forme et l'inclinaison dudit cône du rotor principal 2 par rapport à un référentiel propre lié à l'aéronef.

Afin de contrôler la portance générale du rotor principal 2, en intensité et en direction, le pilote agit généralement sur la valeur de l'angle de pas de chaque pale 3 en commandant une rotation de la pale 3 autour de son axe longitudinal de pas. Ainsi, lorsque le pilote ordonne une variation collective de pas, c'est à dire une variation identique du pas de toutes les pales 3 du rotor principal 2, l'intensité de la portance générale de ce rotor principal 2 varie de manière à contrôler l'altitude de l'aéronef 1.

A contrario, une variation de pas collectif des pales 3 est sans effet sur la direction de cette portance générale. Pour modifier la direction de la portance générale générée par le rotor principal 2, il convient d'incliner ledit cône en réalisant une variation non pas collective mais cyclique de pas. Dans ce cas, le pas d'une pale 3 varie en fonction de son azimut et passe durant un tour complet d'une valeur maximale à une valeur minimale. Ces valeurs sont respectivement obtenues dans des azimuts opposés.

De fait, deux chaînes de commandes de vol manuelles 7 relient deux dispositifs de commandes manuelles 8 aux pales 3 du rotor principal 2. En général, une première chaîne de commande de vol manuelle 7 agit sur le pas cyclique des pales 3 du rotor principal 2, pour provoquer un changement d'attitude de vol en roulis et en tangage, par actionnement d'un dispositif de commande de vol manuelle 8 appelé « manche cyclique 12 ».

Une autre chaîne de commande de vol manuelle 7 agît sur le pas collectif des pales 3 pour provoquer un changement d'attitude de vol en vertical de l'aéronef 1, par actionnement d'un dispositif de commande de vol manuelle 8 dit « levier de pas collectif» ou « levier collectif» et désigné en 13, pour permettre la montée ou la descente de l'aéronef 1.

Sur la figure 1, en complément des commandes issues d'un dispositif de commande de vol manuelle 8 dédié à un changement d'attitude donné (e.g. de tangage, roulis ou lacet), d'autres paramètres de vol imposés (ou structurels de l'aéronef) soient pris en compte par un combinateur 14.

Un tel combinateur 14 agencé au sein d'une chaîne de commande de vol manuelle 7, provoque d'autres changements d'attitude que celui qui est demandé à travers le dispositif de commande de vol manuelle 8 dédié (manche cyclique 12 ou levier de pas collectif 13 ou encore un palonnier 15). En fait, le combinateur 14 permet notamment le fonctionnement des commandes de pas collectif et de pas cyclique indépendamment l'une de l'autre et sans interactions entre elles.

Sur la figure 1, les dispositifs de commandes de vol manuelles 8 sont dédoublés, chaque manche 12, levier 13 ou pédales de palonnier 15 étant dédoublé à droite et à gauche.

Quoiqu'il en soit, une chaîne de commande de vol manuelle 7 dédiée au changement d'attitude de vol en lacet est actionnée par le pilote à l'aide de l'une ou l'autre pédale de palonnier 15, induit des changements d'attitudes initiés par le pilote. Classiquement, ce palonnier 15 agit sur le rotor anti-couple 5, appelé souvent « rotor de queue ».

Sur la figure 1, dans la chaîne de commande de vol manuelle 7 dédiée, on voit une liaison mécanique intermédiaire 10, avec des timoneries primaires de roulis et de tangage, qui relient le manche cyclique 12 au combinateur 14. Ce combinateur 14 est lié au rotor principal 2 par des timoneries secondaires (cycliques). De plus, le levier collectif 13 est relié audit combinateur 14 via une timonerie primaire distincte (collective).

On verra plus loin qu'une chaîne de commande de vol manuelle 7 donnée (en roulis, en tangage ou collective) est reliée à ses surfaces aérodynamiques 11 dédiées (e.g. pales 3 du rotor 2 ou pales du rotor 5), successivement par une timonerie primaire puis par une timonerie secondaire.

Un mouvement du manche cyclique 12 induit un déplacement de la timonerie primaire de roulis ou de tangage, et par suite de la ou les timoneries secondaires correspondantes via le combinateur 14.

Autrement dit, une liaison mécanique intermédiaire 10 comporte en amont au moins une timonerie primaire, et reliée à cette timonerie primaire, vers l'aval au moins une timonerie secondaire.

D'ores et déjà, il se fait que la timonerie secondaire, en aval du combinateur 14 et étendue jusqu'aux surfaces aérodynamiques 11 à piloter, à savoir les pales 6 du rotor 5, comporte une section dite « transmission terminale mécanique » 23, étendue vers l'aval, entre un quadrant pivotant d'entrée 24 et ces surfaces aérodynamiques 11 à piloter.

Similairement au fait qu'un mouvement du manche cyclique 12 induit un déplacement de roulis ou de tangage, un mouvement du levier collectif 13 induit un déplacement de la timonerie primaire collective puis des timoneries secondaires, via le combinateur 14.

Sur les figures 1-2, une assistance en puissance 16 prend la forme d'une servocommande, sur chaque timonerie secondaire.

Par exemple, sur un hélicoptère de faible tonnage, on prévoit en principe une assistance en puissance 16 (servocommande) pour le pilotage en tangage dénommée «servocommande de tangage» par commodité et deux assistances en puissance 16 dites « servocommandes de roulis gauche et droite » pour le pilotage en roulis.

Par suite, pour modifier le pas collectif des pales 3 du rotor principal 2, la pilote déplace le levier de pas collectif 13 qui agit sur le rotor principal 2 via ces trois assistances en puissance 16 (e.g. des servocommandes).

A contrario, pour faire varier le pas cyclique des pales 3 afin de diriger l'aéronef 1 dans une direction donnée, le pilote ordonne alors le déplacement d'au moins une assistance en puissance 16 (servocommande), en basculant le manche cyclique 12 en conséquence, dans la direction souhaitée.

Comme sur la figure 1, pour les hélicoptères de tonnage important, une chaîne de commande de vol manuelle 7 comporte un déphaseur 17.

L'aéronef 1 de la figure 1 étant un hélicoptère à rotor anti-couple 5, la chaîne de commande de vol manuelle 7 en lacet comprend le palonnier 15 qui fait office de dispositif de commande 8 en lacet. Ce palonnier 15 est dédié et relié à travers la liaison mécanique intermédiaire 10 de lacet au rotor arrière 5 par des timoneries primaires et secondaires et par le combinateur 14.

Notons également que l'aéronef 1 de la figure 1 possède un amortisseur de lacet 18, un couplage pas collectif / lacet 19 et divers moyens de renvoi 20 (dont des guignols ou analogues).

Sur la figure 1, on voit un « vérin série » 21 (en anglais « Smart Electro Mechanical Actuator » ou « SEMA ») et une bielle de centrage à ressort 22.

Des réalisations de l'invention sont maintenant décrites.

Bien que les réalisations portent sur une commande de lacet pour hélicoptère, il va de soi que l'invention s'applique d'une part sur d'autres types de commandes de changement d'attitude de vol (roulis, tangage..) et d'autre part à d'autres types d'aéronefs de destination (avions, planeurs, etc.).

Sur la figure 2, les éléments ayant des fonctions similaires à celles des éléments décrits en rapport à la figure 1 (exemple de commandes connues d'attitude), sont désignés par les mêmes références numériques.

Sur la figure 2, la chaîne de commande de vol manuelle 7 en lacet, par ailleurs similaire à celle de la figure 1, montre dans ce premier mode de réalisation de l'invention, un unique vérin série 21, monté en parallèle d'une unique bielle de centrage à ressort 22, les deux au sein de la transmission terminale mécanique 23.

Cet unique vérin série 21 et cette unique bielle de centrage à ressort 22 sont disposés en parallèle l'un de l'autre. Cet unique vérin série 21 et cette unique bielle de centrage 22 sont montés au sein d'une liaison mécanique intermédiaire 10 de lacet, vers l'aval de la chaîne de commande de vol manuelle 7 de lacet, c'est-à-dire dans une partie extrémale aval de cette liaison 10 dite « transmission terminale mécanique » 23.

Cette chaîne de commande de vol manuelle 7 de lacet conforme à l'invention comporte d'amont à aval : son dispositif de commande de vol manuelle 8 sous forme de palonnier 15, des liaisons mécaniques intermédiaires 10 dont la transmission terminale mécanique 23 à l'aval d'une timonerie secondaire, et les surfaces aérodynamiques de changement d'attitude de vol en lacet de l'aéronef 1, à savoir les pales 6 du rotor anti-couple 5.

La transmission terminale mécanique 23 de lacet de la liaison mécanique intermédiaire 10 correspondante comporte classiquement un quadrant pivotant d'entrée 24 à l'amont de la transmission terminale mécanique 23, un quadrant pivotant de sortie 25 plus en aval de cette transmission 23, et au moins un moyen flexible de liaison 26, ici sous forme d'une paire de câbles 27-28 entre les quadrants pivotants d'entrée 24 et de sortie 25.

Comme sur la figure 1, ce moyen flexible de liaison 26 est disposé entre le quadrant pivotant d'entrée 24 et le quadrant pivotant de sortie 25, pour les accoupler en rotation. Ce moyen flexible de liaison 26 relie mécaniquement le quadrant pivotant d'entrée 24 au quadrant pivotant de sortie 25, de manière à transmettre des mouvements de rotation de commande de l'un à l'autre, et inversement.

On a vu qu'une chaîne de commande de vol manuelle 7 possède couramment au moins un vérin série 21, par exemple à l'amont du quadrant pivotant d'entrée 24 et donc hors de la transmission terminale mécanique 23. Dès lors, une telle chaîne de commande de vol manuelle 7 comporte un agencement électronique de contrôle 29 de ce vérin série 21.

De manière générale, un tel agencement électronique de contrôle 29 est logiquement relié à chaque vérin série 21, pour en contrôler des extensions et contractions motorisées.

Pour illustrer une réalisation d'un tel vérin série 21, il s'agit d'actionneurs électromécaniques possédant une électronique intégrée et dits « SEMA». Souvent, un tel vérin série 21 dispose d'une électronique de réception de consignes en numérique (message Arinc 429) et autorisent des déplacements très rapides, de faible amplitude. Ces vérins série 21 sont utilisés dans les systèmes de commandes de vol avec pilotage automatique en tant qu'actionneurs électromécaniques permettant d'exploiter les données d'un calculateur de pilotage automatique afin d'assurer les fonctions de guidage, tout en agissant sur les commandes de vol de l'hélicoptère.

Pour plus de détails, on peut se référer à : http://en.wikipedia.org/w/index.php?title=Linear actuator&printable =yes ou encore http://www.sagemds.com/spip.php?rubrique246&lang=fr

Contrairement à l'invention, sur la figure 1 le vérin série 21 qui est placé hors de la transmission terminale mécanique 23, en amont des moyens flexibles de liaison 26, est couplé au quadrant pivotant d'entrée 24 et l'entraine directement en rotation, sans passer par l'intermédiaire d'un moyen flexible de liaison 26. Le vérin série 21 unique de la figure 2 et conforme à l'invention n'est pas couplé au quadrant pivotant d'entrée 24, tout en dépendant de la même chaîne (7) cinématique générale évidemment.

Ceci distingue l'invention, où ladite transmission terminale mécanique 23 comporte vers l'aval, au moins un vérin série 21 en parallèle d'au moins une bielle de centrage 22, au moins un vérin série 21 et une bielle de centrage 22 étant articulés et donc directement couplés au quadrant pivotant de sortie 25.

Dès lors, ledit quadrant pivotant de sortie 25 possède au moins deux articulations excentriques 30 distinctes de pivotement.

L'une est une articulation excentrique 30 de transmission de commande vers ladite surface aérodynamique 11 de changement d'attitude de vol, sous l'autorité de la chaîne de commande de vol manuelle 7 correspondante. Sur la figure 2, cette articulation excentrique 30 de transmission de commande relie mécaniquement ledit vérin série 21 au quadrant pivotant de sortie 25, pour permettre entre eux une transmission de mouvements par extension ou contraction dudit vérin série 21 unique.

Grâce à cette articulation excentrique 30 de transmission, lors d'un « pilotage de secours » suite à rupture d'une partie de la chaîne de commande de vol manuelle 7 correspondante, des mouvements de commande de vol manuels sur les surfaces aérodynamiques 11 ici de lacet, sont rendus possibles par cette articulation 30.

Ces mouvement sont initiés par le dispositif de commande de vol manuelle 8 correspondant (e.g. palonnier 15) et répercutés par l'agencement électronique de contrôle 29. Cet agencement électronique de contrôle 29 peut alors provoquer des mouvements d'extension ou de contraction du vérin série 21 unique

L'autre articulation excentrique 30 est dite de « centrage d'urgence » et relie mécaniquement ladite bielle de centrage 22 au quadrant pivotant de sortie 25.

En fonctionnement normal, cette liaison mécanique entre bielle 22 et quadrant 25 permet à la bielle de centrage 22 d'accompagner les mouvements du quadrant 25.

De plus, cette liaison assure l'immobilisation de centrage de ce quadrant pivotant de sortie 25 en mode « pilotage de secours » suite à une rupture d'une partie de la chaîne de commande de vol manuelle 7 correspondante et blocage de la bielle 22.

Ceci est le résultat possible du fait que l'unique bielle de centrage 22 est directement articulée à l'opposé du quadrant pivotant de sortie 25 sur un pivot fixe 31 de structure. Un tel pivot fixe 31 est rigidement monté sur la structure de l'aéronef, pour fournir à la bielle de centrage 22 un point fixe d'appui.

De fait, en cas de rupture d'une partie du moyen flexible de liaison 26, typiquement d'un câble 27-28, l'invention fait que le dispositif de commande 8 en amont, transmet une autorité sur l'agencement électronique de contrôle 26 du vérin série 21 situé au sein de la transmission terminale mécanique 23.

Or, le quadrant pivotant de sortie 25 est soumis par ladite bielle de centrage 22 à un blocage d'immobilisation dans une position stable prédéterminée. Ainsi placé en état stable de centrage, c'est-à-dire immobilisé en rotation, ce quadrant pivotant de sortie 25 forme un appui fixe pour l'articulation excentrique 30 de transmission et donc le vérin série 21.

On a vu que ce vérin série 21 de la transmission terminale mécanique 23 présente une extrémité (opposée à celle qui est articulée au quadrant pivotant de sortie 25) qui est mécaniquement reliée à des moyens de renvoi 20 vers l'aval et donc vers les surfaces aérodynamiques 11 (pales 6) de changement d'attitude de vol sur lesquelles on désire agir, en dépit de la rupture.

Cette liaison mécanique entre l'extrémité aval du vérin série 21 et lesdits moyens de renvoi 20 est telle que des contractions / extensions de ce vérin série 21, peuvent en cas d'urgence, faire pivoter ces moyens de renvoi 20. Des déplacements de contrôle des surfaces aérodynamiques 11 (pales 6) sont transmis alors par les moyens de renvoi 20.

En fait, une extension motorisée initiée par l'agencement électronique de contrôle 29 provoque une rotation dans un sens donné (e.g. horaire) des moyens de renvoi 20. Une contraction motorisée initiée par l'agencement électronique de contrôle 29 provoque quant à elle une rotation dans un sens opposé (e.g. trigonométrique) des moyens de renvoi 20.

Selon le sens de rotation, les surfaces aérodynamiques 11 correspondantes sont elles-mêmes déplacées dans un sens ou dans le sens opposé.

Ceci permet qu'un pilotage de secours soit transmis depuis le dispositif de commande 8 en amont, vers l'agencement électronique 29 de contrôle de manière à actionner ledit vérin série 21 et les surfaces aérodynamiques 11 correspondantes.

Il est rappelé que l'invention s'applique à des chaînes de commande de vol manuelles 7 diverses, notamment agissant sur une surface aérodynamique 11 unique ou agissant sur une attitude de vol autre, telle que roulis, tangage, freinage ou analogues.

Sur les figures 3-4, est illustré un autre mode de réalisation de la chaîne de commande de vol manuelle 7 de lacet selon l'invention.

Dans cette chaîne de commande de vol manuelle 7, la transmission terminale mécanique 23 comporte vers l'aval, deux vérins série 21 qui sont appariés par un montage en série. Sur la figure 4, on distingue en haut à gauche un vérin série 21 « amont - droit », d'un vérin série 21 « aval - gauche» en bas à droite. Ces vérins série 21 « amont - droit» et « aval - gauche» forment une paire aboutée.

Cette paire de vérins série 21 est agencée en parallèle d'une unique bielle de centrage à ressort 22. Entre chaque vérin série 21 de la paire, est interposée une bascule 32 à pivot médian d'emplacement fixe. La paire de vérins série 21 est donc indirectement aboutée, et forme une série cinématique où un actionnement d'un vérin série 21 de la paire agit sur l'autre de ces vérins série 21.

A l'instar de la bielle de centrage à ressort 22 qui ici également est articulée sur un pivot fixe de structure 31 proche des moyens de renvoi 10 de la transmission terminale mécanique 23, la bascule 32 à pivot médian d'emplacement fixe est articulée sur un axe fixe de structure 33.

Sur la figure 4, on voit bien que cet axe fixe de structure 33 est rigidement monté sur une traverse de structure 34, elle-même rigidement solidarisée au fuselage de l'aéronef 1 ici à un tronçon de sa poutre de queue. L'axe fixe de structure 33 est donc intégré à une poutre de queue de l'aéronef 1, et sensiblement centré par rapport à la direction transversale Y.

Dans cette réalisation de l'invention, une rupture de timonerie entraine les évènements suivants. En premier lieu, une fois cette rupture décelée, la bielle de centrage à ressort 22 se raidit et immobilise le quadrant pivotant de sortie 25.

Ceci forme appui pour le vérin série 21 amont droit qui peut recevoir, à travers l'agencement électronique de contrôle 29, des instructions de changement d'attitude de vol issues depuis le dispositif de commande de vol manuelle 8 (pédale de palonnier 15 dans le cas du lacet). Il en va de même pour le vérin série 21 aval gauche.

Ces instructions provoquent soit une extension, soit une contraction, soit l'immobilisation de la paire de vérins série 21.

Sur la figure 4, une extension du vérin série 21 amont droit repousse vers la droite l'une branche droite 35 de la bascule à pivot fixe 32. Cette bascule 32 étant indéformable et montée à rotation du l'axe fixe 33, ceci provoque le déplacement vers la droite d'une branche gauche 36 de la bascule.

Notons que l'extrémité du vérin série 21 amont- droit opposée au quadrant pivotant de sortie 25 et articulée sur la branche droite 35, à distance transversalement (formant bras de levier) de l'axe fixe 33. Le vérin série 21 aval-gauche à son extrémité opposée aux moyens de renvoi 20 et articulée sur la branche gauche 36, à distance transversalement (formant un autre bras de levier) de l'axe fixe 33.

Ce déplacement d'extension tire sur le vérin série 21 aval gauche, vers la droite. Sous l'autorité de l'agencement électronique de contrôle 29, ce vérin série 21 aval gauche subit aussi une extension qui complémente celle du vérin série 21 amont-droit.

Ce dédoublement abouté des vérins série 21 est pratique dans le cas où les déplacements rapides mais d'amplitude faible des modèles d'actionneurs « SEMA » choisis sont insuffisants par rapport aux courses souhaitées pour les moyens de renvoi 20 de la transmission terminale mécanique 23 et donc pour la ou les surfaces aérodynamiques 11 à piloter en situation de secours.

A l'inverse, une contraction du vérin série 21 amont tribord de la figure 4 tire la branche droite 35 de la bascule 32 vers la gauche. Cette bascule 32 étant indéformable et montée à rotation du l'axe fixe 33, ceci provoque le déplacement vers la droite de la branche gauche 36. Ce déplacement repousse le vérin série 21 aval gauche, vers la gauche. Sous l'autorité de l'agencement électronique de contrôle 29, ce vérin série 21 aval gauche subit aussi une extension.

Pour obtenir un déplacement dans un sens de la surface aérodynamique 11 correspondante, le dispositif de commande de vol manuelle 8 communique avec l'agencement électronique de contrôle 29, ce dernier commandant les extensions / contractions / blocages (immobilisations) des vérins série 21.

Selon cette réalisation de chaîne de commande de vol manuelle 7, ledit agencement électronique de contrôle 29 du ou des vérins série 21 en aval du quadrant pivotant de sortie 25 est d'un point de vue logique sous l'autorité partagée d'un système de pilotage automatique (e.g. APFS, également désigné en 29) et dudit dispositif de commande de vol manuelle 8.

Selon la figure 4, la chaîne de commande de vol manuelle 7 transmet l'autorité de pilotage sur un changement d'attitude de vol de l'aéronef 1 en lacet, depuis ledit dispositif de commande de vol manuelle 7 sous forme de palonnier 15, pour agir sur les surfaces aérodynamiques 11 en forme de pales 6 du rotor arrière anti-couple 5.

Dans d'autres réalisations, une chaîne de commande de vol manuelle 7 conforme à l'invention transmet l'autorité de pilotage sur un changement d'attitude de vol de l'aéronef 1 en roulis, ledit dispositif de commande de vol manuelle 8 étant alors en forme de manche cyclique 12. Egalement, pour un pilotage de secours en tangage selon l'invention, le dispositif de commande de vol manuelle 8 est en forme de manche cyclique 12.

Sur la figure 2, on voit que la chaîne de commande de vol manuelle 7 comporte, en aval du vérin série 21 articulé au quadrant pivotant de sortie 25, une assistance en puissance 16, sous la forme de servocommande ou analogues. Cette assistance en puissance 16 est interposée en amont de la surface aérodynamique 11 à piloter sous l'autorité de la chaîne de commande de vol manuelle, et en aval dudit quadrant de sortie 25.

Similairement sur la figure 2, dans la transmission terminale mécanique 23 en aval des vérins série 21, une assistance en puissance 16 sous la forme de servocommande est interposée en amont de la surface aérodynamique 11.

Selon la réalisation de la figure 2, la chaîne de commande de vol manuelle 7 de lacet comporte, en amont de la transmission terminale mécanique 23, un combinateur 14 qui est interposé entre le dispositif de commande de vol manuelle 8 et ledit quadrant pivotant d'entrée 24.

Sur les figures 2-5, le moyen flexible de liaison est pourvu de deux câbles en parallèle, avec chacun une extrémité amont et une extrémité aval.

Comme ceci ressort bien des figures 2-5, une extrémité aval 37 de chacun des deux câbles (moyen flexible de liaison 26) parallèles, est couplée, en fonctionnement normal, au quadrant pivotant de sortie 25. Sur la figures 2, une extrémité amont 38 de chacun des deux câbles du moyen flexible de liaison 26 est couplée, en fonctionnement normal, au quadrant pivotant d'entrée 24.

Pour réduire l'encombrement de la transmission terminale mécanique 23, notamment suivant la direction longitudinale X sensiblement entre amont et aval, chacun des vérins série 21 en parallèle de ladite bielle de centrage 22 est au moins en partie contigu de l'autre (vérin 21). Dans des réalisations, ces vérins série 21 sont sensiblement colinéaires, par exemple pour s'accommoder à un faible encombrement disponible perpendiculairement à la direction longitudinale X.

Grâce à l'invention, il est donc possible d'obtenir un aéronef 1 qui met en oeuvre le procédé de pilotage de secours et / ou qui comporte une ou plusieurs chaînes de commande de vol manuelle 7 tels qu'évoqués, que cet aéronef 1 soit ou non à voilure tournante.

L'invention propose donc une utilisation inédite et non évidente de vérin(s) série 21, en cas de rupture de commandes de vol et en tant que moyen de pilotage de secours.

La rupture de commandes de vol conduit parfois à la perte de l'aéronef 1. Certaines chaînes (par exemple chaîne de lacet) peuvent être équipées de bielle de centrage 22 à l'amont du quadrant d'entrée 24 par exemple. Ainsi, en cas de rupture il est possible d'automatiquement figer la position de la gouverne, par exemple le rotor anti-couple 5 pour la chaîne 7 de lacet, dans une position prédéterminée après la rupture des commandes.

Malgré tout, la position de rappel ne correspond qu'à un unique point de vol, associé à une vitesse de refuge. Ceci impose par exemple un atterrissage roulé. L'invention permet de proposer une architecture augmentant la sécurité en cas de rupture d'une chaîne de commande de vol manuelle 7. L'architecture proposée permet de maintenir une autorité partielle sur la chaîne, après rupture des éléments mécaniques.

Or, une chaîne de commande de vol manuelle est parfois vulnérable à cause de sa longueur. On a vu les limites des systèmes connus qui permettent de maintenir un certain niveau de sécurité après la rupture d'un élément de la chaîne de commande.

L'invention n'augmente pas les efforts dans la chaîne de commande de vol manuelle 7 lorsque la chaîne est commandée en mode nominal. L'invention offre une gamme de choix, pour le pilote en situation de secours, de points de vol en équilibre et permet de réduire les risques d'atterrissage roulé.

Avec l'invention, il est possible que le ou les vérins série 21 (dont la fonction en marche normale est la stabilisation) soient situés directement en amont de l'assistance en puissance 16 (e.g. servocommande) pour assurer un pilotage limité de ladite chaîne, après la rupture de la chaîne de commandes de vol. Cela permet d'augmenter la sécurité de l'aéronef 1 sans pénaliser sa masse ni sa complexité.

Les vérins série 21 sont pilotés par un agencement électronique de contrôle 29 qui peut être préexistant, tel que le calculateur de pilote automatique, ce dernier ayant déjà toutes les fonctionnalités pour commander ses allongements / rétractations / blocages. Selon les variations de longueur (allongements / rétractations) le ou les vérins série 21 de l'invention permettent de commander le distributeur d'une assistance (e.g. servocommande) et donc de faire varier le pas des pales 6 du rotor 5 (ou analogues). Le dispositif de commande 8 (manche 21, levier 13, pédales de palonnier 15) dans le poste de pilotage représente l'amont de la chaîne. Le moyen de renvoi 20 en entrée de l'assistance en puissance 16 (servocommande) et la surface aérodynamique 11 qui en dépend, représentent l'aval de la chaîne de commande 7.

Comme il est souhaité que la variation de longueur du vérin série 21 induise un mouvement du moyen de renvoi 20 d'entrée de l'assistance 16 (e.g. servocommande), le(s) vérin(s) série 21 de l'invention voi(en)t une friction plus importante en amont qu'en aval. C'est pour cette raison que, surtout en aval, l'invention ménage des frictions au sein de la chaîne de commande de vol manuelle 7 les plus faibles possibles. L'ancrage des vérins série 21, en amont, est très souvent réalise par des vérins parallèles (non-représentés, dits de « Trim »).

Si l'on positionne les vérins série 21 en aval de la bielle de centrage 22, ils vont donc se trouver ancrés par cette bielle 22, en plus des frictions et d'un vérin parallèle en amont.

En cas de rupture de la chaîne de commande 7, même si il n'y a plus de liaison mécanique entre ce vérin parallèle en amont et les vérins série 21, (comme ceux-ci restent ancrés par la bielle de centrage 22), ces vérins série 21 peuvent continuer à fonctionner. Pour cela, la liaison électrique (alimentation + commande) est maintenue.

Sur les figures 3-4, des vérins série 21 sont montés de part et d'autre d'une bascule 32. En amont les vérins série 21 sont reliés à un secteur du quadrant pivotant de sortie 25. Une bielle élastique de centrage 22 est connectée à une de ses extrémités au dit secteur du quadrant pivotant de sortie 25 et a son autre extrémité à la structure de l'aéronef 1. En aval, les vérins série 21 sont reliés a un moyen de renvoi 20 sous forme de « guignol » qui, via une dernière came de commande 39, est relié à l'entrée de la servocommande.

En fonctionnement normal, les vérins série 21 sont ancrés en amont par le vérin parallèle de lacet du fait de la friction de la chaîne de lacet 7 située en amont des vérins série 21, et par l'effort de rappel de la bielle de centrage 22. En aval, les vérins série 21 ne voient que des efforts très faibles (guignol + bielle + levier d'entrée de servocommande).

Après rupture de la chaîne de commande de vol manuelle 7 en amont du quadrant de sortie 25 par exemple les câbles, sous l'effet des ressorts antagonistes, la bielle de centrage 22 se positionne automatiquement dans une position prédéterminée dite de rappel. Outre le fait que les vérins série 21 s'ancrent en amont sur cette position, l'invention présente l'avantage de définir une position de référence pour le système de pilotage automatique (AFCS ou analogues).

Sous l'effet du recentrage de la commande vers la position de rappel, un mouvement de lacet va être initié qui sera automatiquement amorti par une élongation des vérins série 21 en sens opposé. En effet, la fonction du pilote automatique est de compenser toute perturbation induite sur les paramètres de vol (vitesse angulaire de lacet dans ce cas), que la perturbation soit externe (rafale de vent) ou interne (recentrage par la bielle de centrage par exemple). Ainsi le système de pilotage automatique (AFCS, etc.) va continuer à piloter ses objectifs (tenue de bille en croisière et tenue de cap en stationnaire) tout en amortissant les mouvements parasites, dans la limite de l'autorité allouée à ses vérins série 21.

L'invention permet donc au pilote de pouvoir s'aligner en croisière sur un cap donné et décélérer suivant ce cap jusqu'à atterrissage en stationnaire.

Aucune modification de lois de pilotage n'est nécessaire, ni aucun capteur additionnel.

Une variante est illustrée sur la figure 5, dite « commandes de vol » qui propose un rappel transparent du quadrant pivotant de sortie 25 en fonctionnement normal. Alors, si le moyen flexible de liaison 26 est une paire de câbles, ceux-ci sont soumis à une certaine tension mécanique.

Cette variante de chaîne de commande de vol manuelle 7 selon l'invention « s'arme » automatiquement après rupture des câbles du moyen flexible de liaison 26. A cette fin, un détecteur 40 sensible à cette tension normale, est monté en rapport avec le quadrant pivotant de sortie 25, pour scruter l'état des extrémités aval 37 des câbles du moyen flexible de liaison 26.

L'un des nombreux avantages de l'invention est de réaliser un pilotage limité après rupture d'une chaîne de commande de vol. Les éléments nécessaires sont par ailleurs déjà existants. D'autres part, il y a déjà des architectures avec vérins série 21 en aval des butées principales, pour lesquelles les analyses de sécurité ont été faites. De plus, aucune adaptation des lois de pilotage (système AFCS) n'est nécessaire pour l'implémentation logicielle d'une chaîne de commande de vol manuelle 7 selon l'invention.

D'un point de vue pilotage de l'hélicoptère, le pilote automatique amortit le cas échéant le transitoire de panne et augmente ainsi considérablement les marges de sécurité lors du transitoire de panne et de l'atterrissage après panne.

L'invention n'est néanmoins pas limitée aux modes de réalisation exposés. A l'inverse, elle comprend tous les équivalents des caractéristiques décrites.

## Revendications

1. Procédé de pilotage de secours d'une chaîne de commande de vol manuelle (7) d'aéronef (1), cette chaîne de commande de vol manuelle (7) étant agencée pour comporter au moins d'amont à aval : un dispositif de commande de vol manuelle (8), des liaisons mécaniques intermédiaires (10) de transmission de commande, et une surface aérodynamique (11) de changement d'attitude de vol de l'aéronef (1), ce procédé prévoyant au moins une liaison mécanique intermédiaire (10) agencée pour comporter une transmission terminale mécanique (23), avec un quadrant pivotant d'entrée (24) à l'amont, un quadrant pivotant de sortie (25) à l'aval et au moins un moyen flexible de liaison (26), et pour que cette chaîne de commande de vol manuelle (7) qui comporte au moins une bielle de centrage (22), soit pourvue d'au moins un vérin série (21) couplé à un agencement électronique de contrôle (29),
**caractérisé en ce que** ladite transmission terminale mécanique (23) est agencée pour comporter vers l'aval, au moins un vérin série (21) en parallèle d'au moins une bielle de centrage (22), ledit quadrant pivotant de sortie (25) possédant au moins deux articulations excentriques (30) distinctes de pivotement ; l'une de ces articulations (30) étant une articulation excentrique (30) de transmission de commande vers ladite surface aérodynamique (11) pour que ladite surface aérodynamique soit sous l'autorité de ladite chaîne (7), le procédé prévoyant de relier par cette articulation excentrique(30) de transmission de commande ledit vérin série (21) au quadrant pivotant de sortie (25), tandis que l'autre articulation (30) qui est une articulation excentrique (30) de centrage d'urgence, est agencée pour relier ladite bielle de centrage (22) au quadrant pivotant de sortie (25) ; et **en ce qu'**en cas de rupture dudit moyen flexible de liaison (26), le dispositif de commande (8) en amont prend une autorité sur l'agencement électronique de contrôle (29) du vérin série (21), tandis que le quadrant pivotant de sortie (25) est soumis par ladite bielle de centrage (22) à une action de centrage, de sorte que ce quadrant pivotant de sortie (25) forme un appui pour le vérin série (21), et qu'un pilotage de secours est transmis depuis le dispositif de commande (8) vers l'agencement électronique de contrôle (29) de manière à actionner la surface aérodynamique (11) en aval.

2. Chaîne de commande de vol manuelle (7) d'aéronef (1), cette chaîne de commande de vol manuelle (7) comportant au moins d'amont à aval : un dispositif de commande de vol (8) manuelle, des liaisons mécaniques intermédiaires (10) de transmission de commande, et une surface aérodynamique (11) de changement d'attitude de vol de l'aéronef (1), au moins une liaison mécanique intermédiaire (10) comportant une transmission terminale mécanique (23), avec : un quadrant pivotant d'entrée (24) à l'amont, un quadrant pivotant de sortie (25) à l'aval et au moins un moyen flexible de liaison (26), ce moyen flexible de liaison (26) étant disposé entre le quadrant pivotant d'entrée (24) et le quadrant pivotant de sortie (25) et étant agencé pour transmettre des mouvements de rotation de commande entre ces quadrants pivotants (24-25), cette chaîne de commande de vol manuelle (7) comportant au moins une bielle de centrage (22) et au moins un vérin série (21) relié logiquement à un agencement électronique de contrôle (29) de ce vérin série (21),
**caractérisée en ce que** ladite transmission terminale mécanique (23) comporte vers l'aval, au moins un vérin série (21) en parallèle d'au moins une bielle de centrage (22), ledit quadrant pivotant de sortie (25) possédant au moins deux articulations excentriques (30) distinctes de pivotement : une articulation excentrique (30) de transmission de commande vers ladite surface aérodynamique (11) sous l'autorité de chaîne de commande de vol manuelle (7), cette articulation excentrique (30) de transmission de commande reliant ledit vérin série (21) au quadrant pivotant de sortie (25), l'autre articulation excentrique (30) étant une articulation de centrage d'urgence, qui relie ladite bielle de centrage (22) au quadrant pivotant de sortie (25), une articulation distale de la chaîne de commande de vol manuelle (7) reliant ladite bielle de centrage (22) à une structure fixe de l'aéronef (1) de destination, à l'opposé longitudinalement du quadrant pivotant de sortie (25), ledit quadrant pivotant de sortie (25) formant ainsi, en cas de rupture dudit moyen flexible de liaison (26), un appui pour ledit vérin série (21), tandis que ce vérin série (21) est soumis à l'autorité du dispositif de commande de vol manuelle (8) via l'agencement électronique de contrôle (29).

3. Chaîne de commande de vol manuelle (7) selon la revendication 2 ou mettant en oeuvre le procédé de la revendication 1,
**caractérisée en ce que** ladite transmission terminale mécanique (23) comporte vers l'aval, un unique vérin série (21) en parallèle d'une unique bielle de centrage (22), cet unique vérin série (21) étant directement articulé d'une part sur le quadrant pivotant de sortie (25) et d'autre part à des moyens de renvoi (20) vers ladite surface aérodynamique (11), l'unique bielle de centrage (22) étant directement articulée d'une part sur le quadrant pivotant de sortie (25) et d'autre part à un pivot fixe (31) de structure.

4. Chaîne de commande de vol manuelle (7) selon la revendication 2 ou mettant en oeuvre le procédé de la revendication 1,
**caractérisée en ce que** ladite transmission terminale mécanique comporte vers l'aval, au moins une paire de vérins série (21), et interposée en série entre chaque vérin série (21) d'une paire, une bascule (32) à pivot médian (33) d'emplacement fixe, chaque paire de vérins série (21) étant en parallèle d'au moins une bielle de centrage (22).

5. Chaîne de commande de vol manuel.le (7) selon l'une des revendications 1 à 4,
**caractérisée en ce que** ledit agencement électronique de contrôle (29) du ou des vérins série (21) en aval du quadrant de sortie (25) est logiquement sous l'autorité partagée d'un système de pilotage automatique et dudit dispositif de commande de vol manuelle (8).

6. Chaîne de commande de vol manuelle (7) selon l'une des revendications 1 à 5,
**caractérisée en ce que** cette chaîne de commande de vol manuelle (7) transmet l'autorité de pilotage sur un changement d'attitude de vol de l'aéronef (1) en lacet, ledit dispositif de commande de vol manuelle (8) étant en forme de pédale de palonnier (15).

7. Chaîne de commande de vol manuelle (7) selon la revendication 6,
**caractérisée en ce que** la surface aérodynamique est en forme de pales (6) de rotor arrière anti-couple (5).

8. Chaîne de commande de vol manuelle (7) selon l'une des revendications 1 à 5,
**caractérisée en ce que** cette chaîne de commande de vol manuelle (7) transmet l'autorité de pilotage sur un changement d'attitude de vol de l'aéronef (1) en roulis, ledit dispositif de commande de vol manuelle (8) étant en forme de manche cyclique (12).

9. Chaîne de commande de vol manuelle (7) selon l'une des revendications 1 à 5,
**caractérisée en ce que** cette chaîne de commande de vol manuelle (7) transmet l'autorité de pilotage sur un changement d'attitude de vol de l'aéronef (1) en tangage, ledit dispositif de commande de vol manuelle (8) étant en forme de manche cyclique (12).

10. Chaîne de commande de vol manuelle (7) selon l'une des revendications 1 à 9,
**caractérisée en ce que** cette chaîne de commande de vol manuelle (7) comporte, en aval dudit vérin série (21) articulé au quadrant pivotant de sortie (25), une assistance en puissance (16), sous la forme de servocommande ou analogues interposée en amont de la surface aérodynamique (11) sous l'autorité de la chaîne de commande de vol manuelle (7) et en aval dudit quadrant de sortie (25).

11. Chaîne de commande de vol manuelle (7) selon l'une des revendications 1 à 10,
**caractérisée en ce que** cette chaîne de commande de vol manuelle (7) comporte, en amont de ladite transmission terminale mécanique (23), un combinateur (14) qui est interposé entre le dispositif de commande de vol manuelle (8) et ledit quadrant pivotant d'entrée (24).

12. Chaîne de commande de vol manuelle (7) selon l'une des revendications 1 à 11,
**caractérisée en ce que** cette chaîne de commande de vol manuelle (7) comporte un moyen flexible de liaison (26) pourvu de deux câbles en parallèle, avec chacun une extrémité amont (38) et une extrémité aval (39), une extrémité amont (38) de chacun des deux câbles parallèles étant couplée au quadrant pivotant d'entrée (24), tandis qu'une extrémité aval (37) de chaque câble du moyen flexible de liaison (26) est couplée en fonctionnement normal au quadrant pivotant de sortie (25).

13. Chaîne de commande de vol manuelle (7) selon l'une des revendications 1 à 12,
**caractérisée en ce que** dans la transmission terminale mécanique (23), suivant une direction longitudinale (X), chaque vérin série (21) en parallèle de ladite bielle de centrage (22) est au moins en partie contigu, voire sensiblement colinéaire à cette bielle de centrage (22).

14. Aéronef (1) mettant en oeuvre le procédé selon la revendication 1 et / ou comportant une ou plusieurs chaînes de commande de vol manuelle (7) l'une des revendications 1 à 13, **caractérisée en ce que** cet aéronef (1) est à voilure tournante.

15. Aéronef (1) selon la revendication 14,
**caractérisée en ce que** la surface aérodynamique (11) est un rotor arrière anti-couple (5), tandis que la chaîne de commande de vol manuelle (7) agit sur une attitude de vol en lacet de l'aéronef (1).
